Europäisches Patentamt

European Patent Office

Office européen des brevets

(11) Publication number: **0 076 168**
**B1**

(12) **EUROPEAN PATENT SPECIFICATION**

(45) Date of publication of patent specification: **12.08.87**

(21) Application number: **82305181.8**

(22) Date of filing: **30.09.82**

(51) Int. Cl.⁴: **G 01 H 1/00, G 01 N 29/00**

(54) **Medium characterization system using ultrasonic waves.**

(30) Priority: **30.09.81 JP 155271/81**

(43) Date of publication of application:
**06.04.83 Bulletin 83/14**

(45) Publication of the grant of the patent:
**12.08.87 Bulletin 87/33**

(84) Designated Contracting States:
**DE FR GB NL SE**

(56) References cited:
**US-A-3 457 543**
**US-A-4 102 205**

(73) Proprietor: **FUJITSU LIMITED**
**1015, Kamikodanaka Nakahara-ku**
**Kawasaki-shi Kanagawa 211 (JP)**

(72) Inventor: **Miwa, Hirohide c/o FUJITSU LIMITED**
**Patent Department 1015 Kamikodanaka**
**Nakahara-ku Kawasaki-shi Kanagawa 211 (JP)**

(74) Representative: **Sunderland, James Harry et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to a medium characterization system using ultrasonic waves wherein attenuation data of the medium is measured by sending/receiving to/from an inhomogeneous medium such as biological tissue ultrasonic waves.

In the fields of diagnostic inspection of the human body and flaw detection in metallic materials, techniques in which a medium is characterized by its effects upon ultrasonic waves transmitted into and received from the medium are widely employed. In particular, a system for diagnostic inspection of the human body utilising ultrasonic waves has already been put into practical use, but such ultrasonic wave diagnostic systems as are in use display only a received signal reflected from a heteroacoustic point of the tissues being inspected showing the location of the point in dependence upon the elapsed time between transmission of an ultrasonic wave from a transmitting point and reception of the reflected signal.

Attempts have recently been made to measure or determine the quality of tissues being inspected by analyzing reflected ultrasonic waves and it is expected that a diagnostic system which in practical use can achieve this will offer greater diagnostic capabilities.

For example, Japanese laid-open patents 49-25785 and 49-38490 disclose systems wherein ultrasonic waves of two different frequencies are transmitted into a medium, and reflected waves of respective frequencies are received from the medium, whereby attenuation data relating to the inside of medium can be measured from a ratio of receiving signals of respective frequencies. According to such disclosed systems, the effects upon reflection rate of the angle and smoothness of surface of a heteroacoustic point can be eliminated, so that data indicating only attenuation of ultrasonic waves in internal tissues of the medium can be extracted from the waves reflected from the heteroacoustic point, and thereby a qualitative diagnosis can be made regarding the nature or quality of the tissues in the medium. Namely, the characteristics of a tissue can be discriminated and the quality of such tissue can be diagnosed.

On the other hand, such disclosed systems also teach that an error of measurement can easily occur when intensity of reflected wave is weak and therefore the inventor of the present invention has invented and proposed a technique of measuring attenuation data of a medium from comparison between the shape of the intensity spectrum of the transmitting wave and that of the receiving wave and has described the technique in Japanese patent application No. 56-65536 (European Patent Application No. 82302228.0, to be published under No. 0064399 on 10 Nov. 1982).

However, the system disclosed in the above Japanese laid-open patents, and the technique of the above patent application, indicate that they are based on the assumption that the ultrasonic wave beam transmitted has a one dimensional structure and is one-dimensionally propagated. Further improvement is necessary for a technique dealing with an actual ultrasonic wave beam which has a three-dimensional structure and propagates three-dimensionally. Namely, the profile of an ultrasonic wave beam which has the three-dimensional structure and propagates three-dimensionally changes depending on the transmitting frequency and the effective measuring space included in the beam also changes depending on the frequency. Therefore, when using a transmitting wave having a plurality of frequency elements, the receiving wave signal is influenced differently, depending on the transmitting frequencies, by the differences between the effective measuring spaces of the different frequency elements of the transmitting wave. The receiving wave includes a factor due to the frequency-dependent effective measuring spaces and a factor due to the frequency dependency of medium itself. Thus it is necessary to take steps so that the beam of a transmitting ultrasonic wave has no dependency on frequency even when the transmitting frequency differs (even when a plurality of frequency elements are transmitted).

The inventor of the present invention has invented and proposed a method in which the diameter of an ultrasonic wave transducer aperture is changed in accordance with the transmitting frequency of the transducer so that the ultrasonic wave beam of each transmitting frequency becomes the same three-dimensionally, and a method in which reflected waves are selectively received only from an overlap area served by each transmitting frequency. These methods are respectively presented in Japanese patent application No. 56-48275 "Measuring System Using Ultrasonic Wave" (European Patent Application No. 82301651.4, to be published under No. 0062477 on 13 Oct. 1982) and Japanese Patent Application No. 56-76986 "Ultrasonic Wave Measuring System". According to these patent applications, it is possible to achieve substantial frequency independence of beam shape because the real acoustic field can be made frequency independent by the control of transmitting field and/or receiving field.

To provide that the real acoustic field can be made frequency independent by control of transmitting field, for example, in a reference medium such as water, which has the almost same sound velocity as the measuring medium (human body tissues), is homogeneous and has no or weak frequency dependent attenuation, the frequency components (for example, spectrum shape) of received echo signals from various depths of the acoustic field must be similar to each other.

However, when there is a small error in the control of transmitting acoustic field and there are many frequency components to be considered (sometimes a continuous frequency spectrum), it is very difficult to make the real acoustic field frequency independent. Moreover, it is difficult to cover both near and far acoustic fields with a single transmission control and even in a case in which near and far acoustic fields are covered by two different transmission controls, it is still difficult to make the real acoustic field frequency independent in the transition range between the near and far acoustic fields.

For this reason, the frequency component data (for example, the spectrum distribution shape) at each depth in the acoustic field is no longer similar for the different frequency components even in the reference medium.

In a method allowing frequency dependency in the transmitting acoustic field and in which the dependency of the real acoustic field is eliminated by control of the receiving acoustic field, similarity of frequency component data for different frequency components of reflected wave from each depth in the acoustic field (for example, spectrum distribution shape) is particularly deteriorated. In other words, the acoustic fields formed by transducers (of different frequencies) having the same aperture diameter have divergence angles inversely proportional to the wavelengths of ultrasonic wave of the transducers in the far field and therefore the ratio of low to high frequency component is reduced (as depth increases) because the low frequency element is more diverged to a wider solid angle than is the high frequency element, as the depth becomes deeper. Even in case in which an ultrasonic wave is reflected from a frequency independent reflector placed at selected depths the spectrum distribution shape of the reflected waves from each depth can no longer be maintained similar even in the reference medium.

As explained above it is actually extremely difficult and may be impossible to keep spectrum distribution shape unchanged for different depths of reflection points even when control of the transmitting acoustic field and receiving acoustic field is carried out, and even when the measurement is carried out in a medium which is homogeneous, has almost the same sound velocity and has no or very weak frequency dependent attenuation, such as the above-mentioned reference medium (for example, water).

For this reason, there is a problem in that the characterization of a measuring medium is also influenced by change of spectrum shape depending on the depth of such a reflecting point and it is not possible to separate such change from the frequency dependency of the measuring medium itself.

US—A—4 102 205 discloses ultrasonic apparatus for testing of workpieces which is indicated to provide automatic compensation of echo signals for factors relating to the particular probe employed, the workpiece material and temperature, using stored correction values.

According to the present invention there is provided:

An ultrasonic measuring apparatus for characterizing an inhomogeneous measuring medium such as body tissue, comprising ultrasonic wave transmitting/receiving means for transmitting an ultrasonic wave to the measuring medium and for receiving a reflected wave from the measuring medium, and a measuring device for analyzing the received wave and measuring characteristics of said measuring medium, operable to transmit ultrasonic waves having a plurality of different frequency components from said ultrasonic wave transmitting/receiving means and to measure characteristics of said measuring medium from received waves having a plurality of different frequency components by means of the measuring device, characterized by a memory storing compensating data relating to the respective different frequency components and to respective different depths into the said measuring medium, which compensating data is obtained from reflected waves reflected from a reference reflector which has no or has a known frequency dependency and which is placed at each respective different depth into a reference medium which is or is substantially homogeneous and is or is substantially non-attenuative relative to the measuring medium, and which compensating data shows the frequency characteristic and/or derived related data of the measuring system in a case in which reference medium is used, and compensating means for compensating received waves from said measuring medium using compensating data from the memory corresponding to the depths into the measuring medium and the frequency components to which the received waves relate, prior to measurement by means of the measuring device.

According to the present invention there is provided:

An ultrasonic measuring method for characterising an inhomogeneous measuring medium such as body tissue, excluding any diagnostic method practised on the human or animal body, comprising:

transmitting ultrasonic waves having a plurality of different frequency components into a reference medium, which is or is substantially homogeneous and is or is substantially non-attenuative relative to the measuring medium, for reflection by a reference reflector, which has no or has known frequency dependency, to obtain compensating data from the reflected waves, relating to different depths of the reference reflector in the reference medium for each respective frequency component of the plurality,

the compensating data showing the frequency characteristic and/or derived related data of the measuring arrangement employed in the case in which the reference medium is used,

storing the compensating data pertinent to each respective frequency component and each depth,

transmitting ultrasonic waves having the said plurality of different frequency components into the measuring medium,

receiving reflected waves, from the measuring medium,

compensating the received reflected waves by means of stored compensating data relating to frequency components and depths corresponding to those to which the received reflected waves relate,

deriving characteristics of the measuring medium from the compensated received reflected waves.

The present invention can provide a medium characterization system using reflected ultrasonic wave wherein the effects on a received signal caused as a result of different transmitting fields corresponding to different sending frequencies can be eliminated when making measurements by sending ultrasonic waves having different frequencies.

An embodiment of the present invention can provide an ultrasonic medium characterization system, for characterizing an inhomogeneous medium, in which adverse effects on the received wave arising due to frequency dependency of the acoustic field shape, which appear when a plurality of ultrasonic frequency components are transmitted, are eliminated, and provides for accurate measurement of characteristics such as attenuation data of the medium.

Reference is made, by way of example, to the accompanying drawings, in which:—

Fig. 1 is a schematic diagram for assistance in explaining how acoustic field profile depends on acoustic frequency, and

Fig. 2 is a schematic block diagram of one embodiment of the present invention.

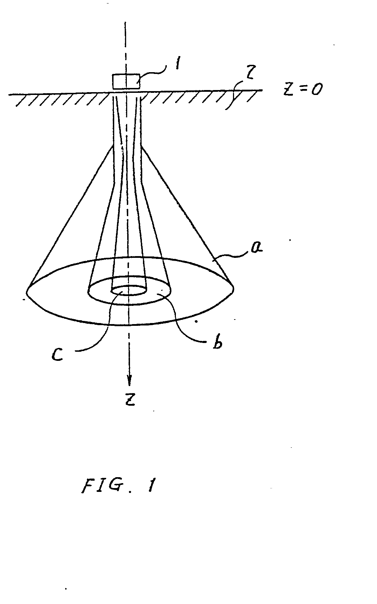

In Fig. 1, 1 is a transmitting/receiving transducer and, for example, it is composed of a piezoelectric element such as PZT. 2 is a measuring medium such as a human body. The transducer 1 is placed on the surface of a medium 2. An ultrasonic wave is transmitted from the transducer 1 in the depth direction, namely Z axis in Fig. 1, and reflected waves from respective points on the Z axis are received and thereby the distribution along the Z axis of frequency dependent characteristics of the medium such as attenuation slope can be measured. The reflected waves from each depth Z in the medium can be discriminated from one another on the basis of time data by using a burst pulse or continuous wave with Chirp modulation of pseudo random code modulation of the transmitting ultrasonic wave. In these cases, a frequency band spreading on both sides of a center frequency FO is always necessary.

When an ultrasonic wave of a center frequency F1 is transmitted from the transducer 1, a beam profile shown as *a* in Fig. 1 can be obtained. When an ultrasonic wave of a center frequency F2(F2>F1) is transmitted from the transducer 1, a beam profile *b* of Fig. 1 can be obtained. The ultrasonic wave beam *a* of lower frequency spreads more than the high frequency ultrasonic wave beam *b*.

According to the above-mentioned Japanese Patent Application No. 56-76986 a region *c* of the receiving acoustic field having no dependency on frequency can be selected within the solid angle where the low frequency ultrasonic wave (a) and the high frequency ultrasonic wave (b) overlap. However, the solid angle of region *c* in the receiving acoustic field is not uniform along the axis Z (as will be seen in Fig. 1) and the intensity ratio of components of frequencies F1 and F2 included in the region *c* of receiving acoustic field is not constant with depth Z. As a result, dependency on frequency is generated in the ultrasonic wave propagation.

In the present invention, a medium which is homogeneous and has almost the same sound velocity as that of the medium to be measured (e.g. human body tissues) and has no or very weak frequency dependent attenuation is used as a reference medium and the frequency characteristic of the measuring system itself is previously measured (before measurements are made on the medium to be measured). As reference medium, water or salt water can be used when the measuring medium is the human body. It is known that the attenuation coefficient of a human body is almost proportional to the frequency of transmitting ultrasonic wave, whilst that of water is almost proportional to the square of the frequency. However, the attenuation coefficient of water is so small that it can be ignored in comparison with that of the human body. Body tissue is inhomogeneous but the variance of acoustic impedance is not so large. A homogeneous medium like water can be used as the reference medium. In such a reference medium, a reference reflector is provided. It is convenient to use a plane body, a spherical (or part-spherical) body or an almost flat body having random rough surface as the reference reflector. For example, a metallic body of aluminium or a body of a plastics material can be recommended. Reflectors of no frequency dependency or known frequency dependency can be used as the reference reflector. Such a reference reflector is fixed in the reference medium, the transducer 1 is placed in contact with such reference medium and an ultrasonic wave of center frequency F1 is transmitted from the transducer 1. The reflected wave is received and its frequency spectrum is also analyzed. For example, when analysis results in an indication that signal intensity in a low frequency region is relatively lower than in a high frequency region, a compensating signal is generated with a view to compensating for this and as a result to provide a uniform frequency characteristic. The reference reflector is then moved on the Z axis in the reference medium and is fixed at another point on the Z axis. Then, transmission/reception of ultrasonic wave, analysis of reflected wave and generation of compensating signal are carried out in the same way. These steps are repeated for a plurality of points on the Z axis and a compensating signal for each point on the Z axis is generated. The above steps are then repeated for an ultrasonic wave of center frequency of F2 and compensating signals are generated for a plurality of points on the Z axis for the center frequency F2. The compensating signals are all stored in a memory.

It will be appreciated that the reference reflector may be positioned to many points on the Z axis to obtain comprehensive compensation signal data.

The gain of a filter circuit used to extract the relevant frequency component from a reflected wave is compensated by the compensating signals derived as above so that the filter circuit provides a compensated output.

As explained above, the reflected wave including only the frequency dependency of the medium itself can be obtained by previously obtaining the frequency characteristic of the measuring system itself using the reference medium and then compensating such reflected wave at the time of measurement of the medium to be measured in such a manner that the frequency characteristic of said measuring system is eliminated from the measured reflected waves.

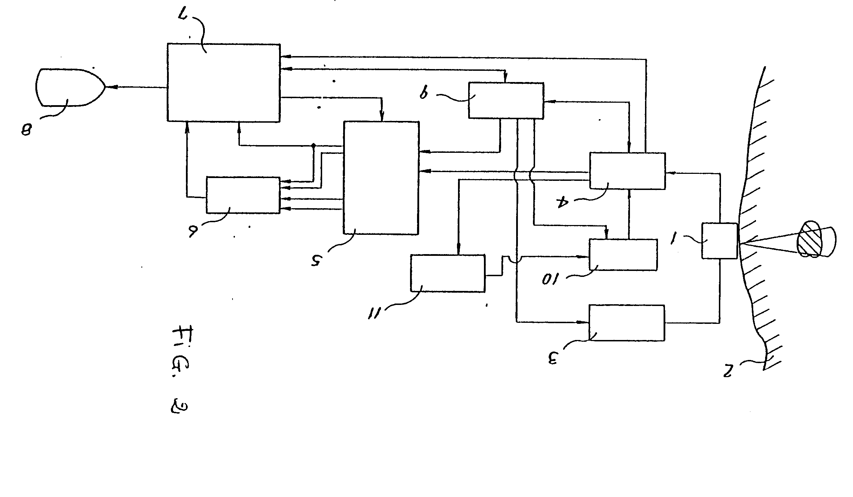

Fig. 2 is a schematic block diagram illustrative of a preferred embodiment of the present invention. In Figure 2, 1 is a transducer which transmits an ultrasonic wave beam and receives a reflected wave as explained above, and moreover scans the measuring medium 2 by changing its transmitting direction for each cycle of transmission and reception of ultrasonic waves of center frequencies F1 and F2. 3 is a transmitting unit which causes the transducer 1 to oscillate at the center frequencies F1 and F2. 4 is a receiving unit which discriminates the receiving output of transducer 1 using a filter circuit and outputs the amount of energy associated with each reflected wave and the elapsed time between reception of a reflected wave and ultrasonic wave transmitting time. 5 is a memory unit which sequentially stores the output of the receiving unit 4. 6 is an operation unit which obtains the attenuation slope from the amount of energy of the reflected wave of each frequency and the elapsed time between reception of the reflected wave and the ultrasonic wave transmitting time. 7 is a display control unit which generates display data relating to a tomographic plane based on the data from said operation unit 6 in synchronization with the receiving timing of the receiving unit 4. 8 is a display unit for displaying pictures using a CRT display etc. 9 is a control unit which changes over transmission and reception of ultrasonic wave, stores data in the memory unit 5 and controls read timing. 10 is a compensating memory for storing compensating data as described above. 11 is a compensating data generating circuit which analyzes the frequency of receiving signal and generates compensating signals as mentioned above.

Operations of the apparatus shown in the block diagram are explained below.

First, generation of compensating data will be explained.

As medium 2, the abovementioned reference medium, for example water, is first provided. The control unit 9 causes the transmitting unit 3 to oscillate the transducer 1 to produce a signal of frequency F1. The control unit 9 sends the send timing signal to the receiving unit 4, causing it to prepare for reception and start timing operation by means of a timer circuit comprised therein. A reflected wave from a reference reflector in the reference medium is received by the transducer 1 and then input to the receiving unit 4. When a signal higher than a fixed (preselected) level is input thereto, the receiving unit 4 considers it to be a reflected wave and amplifies it by means of an amplifier comprised therein and filters the signal on a center frequency F1 by means of a filter circuit comprised therein. The filtered signal is input to the compensating data generating circuit 11 and is analyzed. That is, the amount of relative intensity variation of the frequency component of the signal of center frequency F1 having the specified band width is obtained, a signal for compensating that amount of relative intensity variation is generated and this compensating data is stored in the compensating memory 10.

As explained previously, by providing reference reflection at a variety of points on the Z axis, reflected waves corresponding to each such point can be obtained, and compensating data generated for each such point and stored in the compensating memory 10 in accordance with an address corresponding to the distance from the transducer 1 to the reference reflecting point concerned.

In the same way, compensating data is generated for an ultrasonic wave of frequency F2 and the generated compensating data is stored in the compensating memory 10.

This compensating data can include compensation for frequency dependency of the reference reflector, if a reflector such as a sphere, which has well known frequency dependency, is used as the reference reflector.

This compensating data is not thereafter required to be changed so long as the actual measuring medium is similar to the reference medium.

The following explanation may be of assistance in understanding why such compensating data is of use.

Biological tissue is inhomogeneous. Its scattering (this word is here used to comprehend reflection, scattering, refraction and diffraction) and its attenuation are frequency dependent, and this frequency dependency can be used to provide parameters for determining tissue characteristics.

However, the ratio of the variation of acoustic impedance of biological tissue to the mean impedance of such tissue is not very large, and in this embodiment of the present invention the following approximation is employed.

The geometrical propagation of the ultrasonic wave in the tissue can be assumed to be same as that in homogeneous medium and frequency dependency due to geometrical propagation in the tissue can be compensated by the experimentally obtained data relating to geometrical propagation in homogeneous or only weakly inhomogeneous medium which has almost no attenuation, namely a reference medium as mentioned above.

Now, when measuring a measuring medium, the control unit 9 causes the transmitting unit 3 to oscillate the transducer 1 with the signal of frequency F1. The control unit 9 sends a send timing signal to the receiving unit 4 and causes it to prepare for reception and to start timing operation by the comprised timer circuit. A reflected wave from a heteroacoustic point in the measuring medium is received by the transducer 1 and then input to the receiving unit 4. When a signal higher than the specified (preselected) level is input, the receiving unit 4 considers it to be a reflected wave and amplifies it with the comprised amplifier and then extracts a signal of the center frequency F1 with the comprised filter circuit. In this case, the filter circuit is so structured that the gain at each frequency is varied in dependence upon the input from memory 10. Meanwhile, the control unit 9 reads the compensating data relating frequency F1 from said compensating memory 10, in accordance with the distance signal obtained by an output of the timer circuit, and controls the gain of filter circuit. Thereby the output of filter circuit becomes a signal indicating the frequency characteristic of the measuring medium not including the frequency characteristic of the measuring system itself. An output of filter circuit is converted to an amount of energy by the conversion circuit and such amount of energy is converted to digital data as an output of the receiving unit 4.

The receiving unit 4 outputs this reflected energy value and a time output of the timer circuit indicating when the relevant reflected wave was received and these data are stored in the memory unit 5.

As explained above, the reflected energy value and time output corresponding to the reflected wave from each heteroacoustic point of a measuring medium are sequentially stored on a time series basis.

In the same way, the control unit 9 causes the transmitting unit 3 to oscillate the transducer 1 to provide a signal of frequency F2, and the receiving unit 4 receives a reflected wave from the measuring medium. The comprised amplifier circuit amplifies the reflected wave and the comprised filter circuit extracts a signal of center frequency F2. The control unit 9 reads the compensating data relating to frequency F2 of said compensating memory 10 in accordance with the distance signal obtained by the output of the timer circuit and controls the gain of filter circuit. An output of filter circuit is converted into an energy value by the conversion circuit and moreover it is converted into digital value and is used as an output of the receiving unit 4.

The receiving unit 4 outputs this reflected energy value and the time output of timer circuit indicating when the relevant reflected wave was received and these are all stored in the memory unit 5.

As explained above, for the signal of frequency F2, the reflected energy value and time output corresponding to the reflected wave from each heteroacoustic point of a measuring medium are sequentially stored on a time series basis.

The operation unit 6 calculates the attenuation slope from the stored data of memory unit 5. A structure for such a function is explained in detail in the specification of the Japanese Patent Application No. 55-74680 "Measurement method and System utilizing ultrasonic wave" (European Patent Application No. 81302455.1, publication No. 0041403) by inventors including the inventor of the present invention. Detailed explanation will be omitted here, but operations involved are outlined below.

First, when the propagation speed in the measuring medium is taken to be V, the ith reflection energy value for a transmitting frequency F1 obtained from the receiving unit 4 is taken to be Ri, the ith reflection energy for a transmitting frequency F2 is taken to be Ri', the time output of ith reflection wave is taken to be Ti, and attenuation coefficient between the heteroacoustic point where the ith reflection wave is generated and the heteroacoustic point where the $(i-1)$th reflection wave is generated is taken to be $\mu i$, the following relationship can be obtained.

$$\mu i - \mu i' = -R/(V \cdot T)$$
Where,
$R = \log(Ri/Ri') - \log[R(i-1)/R(i-1)']$
$T = Ti - T(i-1)$

Therefore, the reflection energy values of the ith reflection wave for the transmitting frequencies F1 and F2 corresponding to the time output of the ith reflection wave are read from the memory unit 5, moreover the reflection energy values of the $(i-1)$th reflection wave for the transmitting frequencies F1 and F2 corresponding to the time output of the $(i-1)$th reflection wave are read from the memory unit 5, a value of R is obtained by the operation unit 6, then the time output of the ith reflection wave and time output of the $(i-1)$th reflection wave are read from the memory unit 5, and a value of T is obtained by the operation unit 6. Thereby the operation unit 6 is capable of calculating a value of $[\mu i - \mu i']$ using a known value of V.

Moreover, the attenuation slope $a$ can be obtained by the following operation.

$$= 4.343 \cdot \mu/(F1 - F2)$$
Where,
$$\mu = \mu i - \mu i'$$

The attenuation slope or attenuation coefficient including such attenuation slope thus obtained is sent to the display control unit 7, which generates display data relating to a tomographic plane based on the data sent from the aforementioned operation unit 6 in synchronization with the receiving timing of the receiving unit 4 and distribution of attenuation data is displayed on the display unit 8 which displays the picture of tomographic plane.

In addition to the above embodiment, it is also possible to store the compensating data prepared separately into the compensating memory, without providing particular compensating data generating circuit 11.

With the present invention, as explained above, it is possible to obtain a reflection signal indicating the frequency characteristic of the measuring medium itself, not including the frequency characteristic of the measuring system, by providing a memory which stores the compensating data relating to each depth of a measuring medium obtained from reflection waves from a reference reflector placed at each depth in a reference medium and by compensating said received waves in dependence upon the compensating data of said memory corresponding to each depth. Thereby, the accuracy of qualitative measurement of a measurement medium can be improved, assuring highly accurate measurement.

The present invention has been described on the basis of a preferred embodiment. It will be appreciated nevertheless that this invention can be adopted not only to control of receiving acoustic field but also to control of transmitting acoustic field and to a case in which control is not carried out for the acoustic field. In the preferred embodiment, two frequency bands F1 and F2 were considered, but this invention can be applied to a continuous full spectrum. Namely, various modifications can be adopted within the scope of the claims.

## Claims

1. An ultrasonic measuring apparatus for characterizing an inhomogeneous measuring medium (2) such as body tissue, comprising ultrasonic wave transmitting/receiving means (1, 3, 4) for transmitting an ultrasonic wave to the measuring medium and for receiving a reflected wave from the measuring medium, and a measuring device (6) for analyzing the received wave and measuring characteristics of said measuring medium, operable to transmit ultrasonic waves having a plurality of different frequency components (F1, F2) from said ultrasonic wave transmitting/receiving means (1, 3, 4) and to measure characteristics of said measuring medium (2) from received waves having a plurality of different frequency components by means of the measuring device (6), characterized by a memory (10) storing compensating data relating to the respective different frequency components and to respective different depths into the said measuring medium (2), which compensating data is obtained from reflected waves reflected from a reference reflector which has no or has a known frequency dependency and which is placed at each respective different depth into a reference medium which is or is substantially homogeneous and is or is substantially non-attenuating relative to the measuring medium, and which compensating data shows the frequency characteristic and/or derived related data of the measuring system in a case in which reference medium is used, and compensating means (9, 5) for compensating received waves from said measuring medium using compensating data from the memory (10) corresponding to the depths into the measuring medium and the frequency components to which the received waves relate, prior to measurement by means of the measuring device (6).

2. An apparatus as claimed in claim 1, further comprising a compensating data generating circuit (11) operable for obtaining the compensating data.

3. An ultrasonic measuring method for characterizing an inhomogeneous measuring medium such as body tissue, excluding any diagnostic method practised on the human or animal body, comprising:
transmitting ultrasonic waves having a plurality of different frequency components into a reference medium, which is or is substantially homogeneous and is or is substantially non-attenuative relative to the measuring medium, for reflection by a reference reflector, which has no or has known frequency dependency, to obtain compensating data from the reflected waves, relating to different depths of the reference reflector in the reference medium for each respective frequency component of the plurality,
the compensating data showing the frequency characteristic and/or derived related data of the measuring arrangement employed in the case in which the reference medium is used,
storing the compensating data pertinent to each respective frequency component and each depth,
transmitting ultrasonic waves having the said plurality of different frequency components into the measuring medium,
receiving reflected waves, from the measuring medium,
compensating the received reflected waves by means of stored compensating data relating to frequency components and depths corresponding to those to which the received reflected waves relate,
deriving characteristics of the measuring medium from the compensated received reflected waves.

## Patentansprüche

1. Ultraschallmeßvorrichtung zum Charakterisieren eines inhomogenen zu meßenden Mediums (2) wie eines Körpergewebes, mit einer Ultraschallwellen-Sende/Empfangseinrichtung (1, 3, 4) zum Senden einer Ultraschallwelle in das zu messenden Medium und zum Empfangen einer von dem zu messenden Medium reflektierten Welle, und einer Meßeinrichtung (6) zum Analysieren der empfangenen Welle und zum Messen von Charakteristiken des genannten zu messenden Mediums, die betreibbar ist, um Ultraschallwellen, die eine Vielzahl von verschiedenen Frequenzkomponenten (F1, F2) haben, von der genannten Ultraschallwellen-Sende/Empfangseinrichtung (1, 3, 4) zu senden, und um die Charakteristiken des zu messenden Mediums (2) aus den empfangenen Wellen, die eine Vielzahl von Frequenzkomponenten haben, mit Hilfe der Meßeinrichtung (6) zu messen, gekennzeichnet durch

einen Speicher (10), der Kompensationsdaten speichert, die die jeweils verschiedenen Frequenzkomponenten und jeweils verschiedenen Tiefen in das zu messende Medium (2) betreffen, welche Kompensationsdaten aus reflektierten Wellen erhalten werden, die von einem Referenzreflektor reflektiert werden, der keine oder eine bekannte Frequenzabhängigkeit hat und der an einer jeweils unterschiedlichen Tiefe in einem Referenzmedium angeordnet ist, welches homogen oder im wesentlichen homogen ist und nicht dämpfend oder im wesentlichen nicht dämpfend relativ zu dem zu messendem Medium ist, und welche Kompensationsdaten die Frequenzcharakteristik und/oder abgeleitete betreffende Daten des Meßsystems in einem Fall zeigen, in dem ein Referenzmedium verwendet wird, und durch Kompensationseinrichtungen (9, 5) zum Kompensieren von Wellen, die von dem genannten zu messenden Medium empfangen werden, unter Verwendung von Kompensationsdaten aus dem Speicher (10), die den Tiefen in das zu vermessende Medium und den Frequenzkomponenten entsprechen, zu denen die empfangenen Wellen gehören, vor der Messung mittels der Meßvorrichtung (6).

2. Vorrichtung nach Anspruch 1, ferner mit einer Kompensationsdaten-Generatorschaltung (11), die betreibbar ist, um die Kompensationsdaten zu ermitteln.

3. Ultraschallmeßverfahren zur Charakterisierung eines inhomogenen zu messenden Mediums wie eines Körpergewebes, ausschließlich irgendwelcher diagnostischer Verfahren, die an dem menschlichen oder tierischen Körper durchgeführt werden, mit:

Senden von Ultraschallwellen, welche eine Vielzahl von verschiedenen Frequenzkomponenten haben, in eine Referenzmedium, welches homogen oder im wesentlichen homogen ist und welches relativ zu dem zu messenden Medium nicht dämpfend oder im wesentlichen nicht dämpfend ist, zur Reflexion durch einen Referenzreflektor, welcher keine oder eine bekannte Frequenzabhängigkeit hat, um Kompensationsdaten aus den reflecktierten Wellen zu ermitteln, die sich auf die verschiedenen Tiefen des Referenzreflektors in dem Referenzmedium für jede jeweilige Frequenzkomponente der genannten Vielzahl beziehen,

wobei die Kompensationsdaten die Frequenzcharakteristik und/oder abgeleitete zugehörige Daten der messenden Anordnung zeigen, die in dem Fall verwendet wird, in dem das Referenzmedium benutzt wird,

Speichern der Kompensationsdaten, die zu jeder entsprechenden Frequenzkomponente und jeder Tiefe gehören,

Senden von Ultraschallwellen, die genannte Vielzahl von verschiedenen Frequenzkomponenten enthalten, in das zu messende Medium,

Empfangen der von dem zu messenden Medium reflektierten Wellen,

Kompensation der empfangenen reflektierten Wellen mittels gespeicherter Kompensationsdaten, die die Frequenzkomponenten und die Tiefen betreffen, welche denjenigen entsprechen, zu denen die empfangenen reflektierten Wellen gehören,

Ableitung der Charakteristiken des zu messenden Mediums aus den kompensierten, empfangenen, reflektierten Wellen.

**Revendications**

1. Appareil de mesure par ultrasons destiné à caractériser un milieu de mesure non homogène (2) comme un tissu vivant, comprenant un dispositif d'émission et de réception d'ondes ultrasonores (1, 3, 4) destiné à émettre une onde ultrasonore vers le milieu de mesure et à recevoir une onde réfléchie par le milieu de mesure, et un dispositif de mesure (6) destiné à analyser l'onde reçue et à mesurer des caractéristiques dudit milieu de mesure, ayant pour fonction d'émettre des ondes ultrasonores contenant plusieurs composantes de fréquences différentes (F1, F2) par ledit dispositif d'émission et de réception d'ondes ultrasonores (1, 3, 4) et de mesurer des caractéristiques dudit milieu de mesure (2) à partir d'ondes reçues ayant plusieurs composantes de fréquences différentes au moyen du dispositif de mesure (6) caractérisé par une mémoire (10) mémorisant des données de compensation concernant les composantes respectives de fréquences différentes et des profondeurs respectives différentes dans ledit milieu de mesure (2), les données de compensation étant obtenues à partir d'ondes réfléchies par un réflecteur de référence qui n'a aucune dépendance en fréquence ou qui a une dépendance en fréquence connue et qui est placé à chaque profondeur respective différente dans un milieu de référence qui est homogène ou pratiquement homogène et qui ne produit pas ou pratiquement pas d'atténuation par rapport au milieu de mesure, les données de compensation indiquant la caractéristique en fréquence et/ou des données associées du système de mesure dans un cas où le milieu de référence est utilisé, et un dispositif de compensation (9, 5) destiné à compenser des ondes reçues dudit milieu de mesure en utilisant des données de compensation provenant de la mémoire (10), correspondant aux profondeurs dans le milieu de mesure et aux composantes de fréquences que concernent les ondes reçues, avant la mesure au moyen du dispositif de mesure (6).

2. Appareil selon la revendication 1, comportant en outre un circuit (11) générateur de données de compensation ayant pour fonction d'obtenir les données de compensation.

3. Procédé de mesure par ultrasons, destiné à caractériser un milieu de mesure non homogène comme un tissu vivant, à l'exclusion de tout procédé de diagnostic pratiqué sur le corps humain ou le corps d'un animal, consistant: à émettre dès ondes ultrasonores ayant plusieurs composantes de fréquences différentes dans un milieu de référence qui est homogène ou pratiquement homogène et qui ne produit pas ou pratiquement pas d'atténuation par rapport au milieu de mesure, pour une réflexion par un réflecteur de référence qui n'a aucune dépendance de fréquence ou a une dépendance de fréquence connue, pour obtenir des données de compensation à partir des ondes réfléchies, concernant des profondeurs différentes du réflecteur de référence dans le milie de référence pour chaque composante de fréquence respective parmi les composantes, les données de compensation indiquant la caractéristique en fréquence et/ou des données associées du dispositif de mesure utilisé dans le cas où le milieu de référence est utilisé, à mémoriser les données de compensation concernant chaque composante de fréquence respective et chaque profondeur, à émettre des ondes ultrasonores comprenant lesdites composantes de fréquences différentes dans le milieu de mesure, à recevoir des ondes réfléchies par le milieu de mesure, à compenser les ondes réfléchies reçues au moyen des données de compensation mémorisées concernant les composantes de fréquences et les profondeurs correspondant à celles que concernant les ondes réfléchies reçues, et à obtenir les caractéristiques du milieu de mesure à partir des ondes réfléchies reçues et compensées.

FIG. 1

FIG. 2